# EUROPEAN PATENT SPECIFICATION

(11) **EP 0 645 750 B1**
(45) Date of publication and mention of the grant of the patent: **29.12.1999**
(21) Application number: 94202711.1
(22) Date of filing: 21.09.1994
(51) Int. Cl.: G09G 1/16, G09G 1/10, G09G 1/04, H04N 3/16

(54) **Arrangement for adjusting monitor settings in a picture display system**
Anordnung zur Einstellung der Monitorsteuerungen in einem Bildanzeigesystem
Arrangement pour ajuster les réglages d'un moniteur dans un système d'affichage d'images

(30) Priority: 28.09.1993 BE 9301013
(43) Date of publication of application: 29.03.1995
(73) Proprietor: Koninklijke Philips Electronics N.V., 5621 BA Eindhoven (NL)
(72) Inventor: Hu, Shih-Hsien, NL-5656 AA Eindhoven (NL); Yu, Shih-Che, NL-5656 AA Eindhoven (NL); Shy, Cheng-I Jack, NL-5656 AA Eindhoven (NL); Maloney, Martin Emmet, NL-5656 AA Eindhoven (NL)
(74) Representative: Schmitz, Herman Jan Renier

(56) References cited:
- DE-A- 1 960 493
- DE-A- 4 305 026
- US-A- 3 493 674
- US-A- 4 112 445
- US-A- 5 140 420
- RUNDFUNKTECHNISCHE MITTEILUNGEN, vol.11, no.2, 1967, NORDERSTEDT DE pages 108 - 113 S.DINSEL 'Übertragung eines zweiten Tonkanals beim Fernsehen'
- PATENT ABSTRACTS OF JAPAN vol. 11, no. 257 (E-534) 20 August 1987 & JP-A-62 067 974 (VICTOR CO. OF JAPAN) 27 March 1987

## Description

### FIELD OF THE INVENTION

The invention relates to a picture display arrangement comprising a picture source for generating a video signal and a synchronizing signal, the synchronizing signal comprising synchronizing pulses whose frequency is representative of the line frequency or picture frequency of the video signal, and a monitor for displaying a picture represented by said signals, which monitor has an adjustment circuit for adjusting picture parameters in response to control signals applied to the circuit, the picture source being suited to generate the control signals and modulate the synchronizing signal with the control signals, the monitor having a demodulator for demodulating the synchronizing signal in order to obtain the control signals. The invention also relates to said picture source and said monitor separately.

### BACKGROUND OF THE INVENTION

An arrangement of the type defined in the opening paragraph is known from DE 43 05 026 A1. The known arrangement comprises a personal computer and a picture monitor coupled thereto. The personal computer has a video card, which generates the video signal and the synchronizing signal. The synchronizing signal is representative of the line frequency and the picture frequency of the video signal. The arrangement enables adjustment of picture parameters, such as picture position and brightness, to be controlled from the computer. When a user inputs a control instruction for adjusting a picture parameter, control signals are generated and added to the synchronizing signal during a vertical retrace period. The monitor is adapted to detect these control signals, separate them from the synchronization signal and apply them to a display control circuit which actually performs the adjustment of the picture parameters.

A disadvantage of the known arrangement is that problems arise when the computer is combined with a conventional monitor. The control signals which are added by the computer to the synchronization signal disturb the operation of the conventional monitor. Similar problems are to be expected when the prior-art monitor is combined with a conventional computer. In that case, disturbances in the vertical retrace period (e.g. noise) can be interpreted by the prior-art monitor as control signals.

### OBJECT AND SUMMARY OF THE INVENTION

It is an object of the invention to provide an arrangement which mitigates the above problems.

To this end the arrangement in accordance with the invention is charactenzed in that the picture source is adapted to modulate the pulse width of the synchronizing pulses with the control signals and that the demodulator is adapted to demodulate the control signals from the pulse width of the synchronizing pulses said pulse width being constrained to a range of widths that are recognized as regular pulse widths by a monitor not having a demodulator for demodulating the control signals from the synchronizing signal.
The frequency of the synchronizing pulses then remains invariably representative of the line frequency or picture frequency of the video signal. In practice, the synchronizing signal thus formed is found not to disturb the synchronization of the monitor. It can be applied to the customary synchronizing circuit without any further processing and, as a consequence, it is fully compatible with a non-modulated synchronizing signal. Therefore, the picture source can readily be coupled to a customary monitor with autonomous adjustment provisions. When the picture source is a PC, the width of the synchronizing pulses is generally dictated by a register value which is easy to change under software control. Preferably, the vertical synchronizing pulses are modulated. Demodulation is possible with a simple and relatively slow microprocessor. Moreover, the vertical picture synchronization of a monitor has a minimal susceptibility to modulation of the vertical pulse width.

A preferred embodiment of the picture source is characterized in that the control signal is transmitted in the form of a bit series preceded by a start bit, the logic value of a bit being represented by the pulse width of a synchronizing pulse. In order to enable a plurality of picture parameters to be adjusted, each bit series may include a code for a picture parameter and a desired value for this parameter. Instead of an absolute parameter value, the bit series may include an instruction to increment or decrement the current parameter value by a given amount.

The monitor in accordance with the invention has a demodulator for demodulating the synchronizing signal in order to obtain the control signals. The demodulator demodulates the pulse width of the synchronizing pulses and determines the corresponding logic bit value. After detection of a start bit, the demodulator derives the control signal from the bit series following the start bit.

### BRIEF DESCRIPTION OF THE DRAWINGS

Figure 1 shows diagrammatically a picture display arrangement in accordance with the invention.

Figure 2 shows an example of a timing circuit shown in Figure 1.

Figure 3 shows some time diagrams to illustrate the operation of the timing circuit shown in Figure 2.

Figure 4 is the flow chart of an adjustment program carried out by a processor shown in Figure 1.

Figure 5 shows some time diagrams to explain the flow chart shown in Figure 4.

Figure 6 shows an example of an adjustment circuit shown in Figure 1.

Figure 7 is a flow chart to illustrate the operation of the adjustment circuit shown in Figure 6.

### DESCRIPTION OF EMBODIMENTS

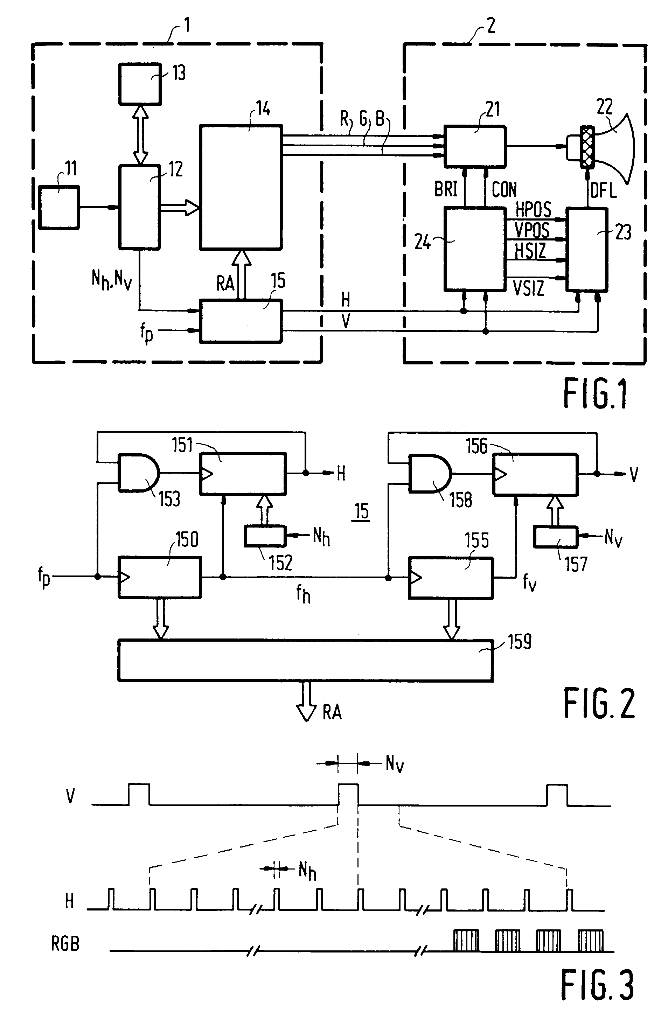

Figure 1 shows diagrammatically a picture display arrangement in accordance with the invention. The arrangement comprises a picture source **1** and a monitor **2**. The picture source supplies a video signal consisting of the three primary colour signals R, G and B, a horizontal synchronizing signal H and a vertical synchronizing signal V to the monitor.

In the present embodiment the picture source **1** is formed by a personal computer. This computer comprises a keyboard **11**, a processor **12**, a working memory **13**, a picture memory **14** and a timing circuit **15**. In practice, the picture memory **14** and the timing circuit **15** are accommodated on a plug-in card, which is commercially available as a "video card". Pictures are generated in that the processor loads the RGB values of the individual pixels into the picture memory. The picture memory has a capacity of a multitude of pixels and is read out periodically with a given line and picture frequency under the control of the timing circuit **15**. For this purpose the timing circuit supplies consecutive read addresses RA to the picture memory. In synchronism therewith, the circuit generates the synchronizing signals H and V to be supplied to the monitor.

Figure 2 shows an example of the timing circuit **15**. The timing circuit comprises a first divider **150** which reduces the frequency of a clock signal having the pixel frequency fₚ to a line frequency fₕ, and a second divider **155** which reduces the line frequency fₕ to the picture frequency fᵥ. The output signal of the first divider **150** also constitutes a load signal for a down-counter **151**, so that every line this counter is loaded with a value Nₕ stored in a register **152**. As long as the down-counter has a non-zero count, it will receive clock pulses of the pixel frequency *via* an AND gate **153**. When the count has become zero, the AND gate blocks subsequent clock pulses. This yields the synchronizing signal H having the line frequency fₕ and a pulse width of Nₕ pixels. This signal is denoted by the reference H in Figure 3.

Likewise, the output signal of the second divider **155** constitutes a load signal for a further down-counter **156**, so that every picture this counter is loaded with a value Nᵥ stored in a further register **157**. As long as the down-counter has a non-zero count, it will receive clock pulses of the line frequency *via* a further AND gate **158**. When the count has become zero, the further AND gate blocks subsequent clock pulses. This yields the synchronizing signal V having the picture frequency fᵥ and a pulse width of Nᵥ lines. This signal is denoted by the reference V in Figure 3. The addressing circuit **159** derives the read addresses RA for the picture memory from the counts produced by the first divider **150** and the second divider **155**. The video signal read from the picture memory by means of these read addresses is denoted by the reference RGB in Figure 3.

It appears from the foregoing that the pulse width Nₕ of the horizontal synchronizing signal and the pulse width Nᵥ of the vertical synchronizing signal are determined by the contents of the registers **152** and **157**, respectively. Both registers receive the respective value from the processor **12** (see Figure 1). In the example described below it will be assumed that the pulse width Nₕ does not change. However, the pulse width Nₕ will be modulated by the processor **12** in a manner to be described hereinafter.

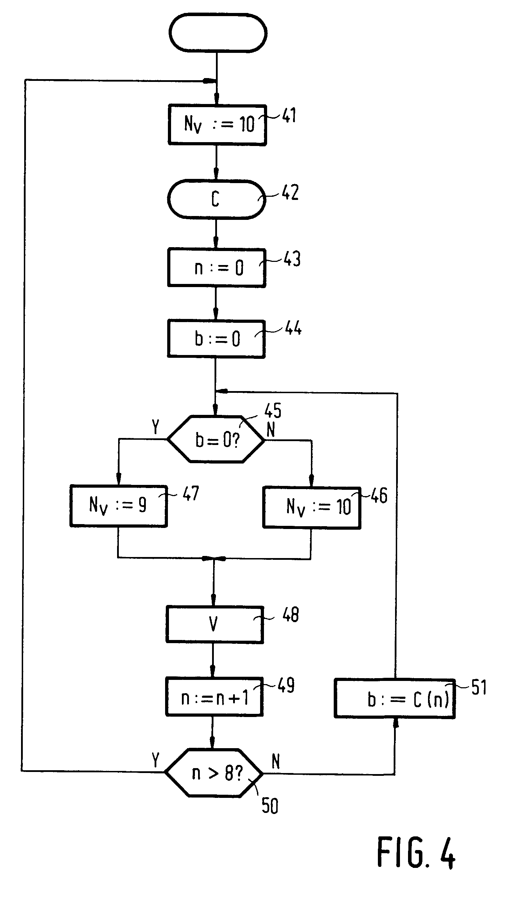

The working memory **13** of the personal computer **1** (see Figure 1) can be loaded with an adjustment program for adjusting the monitor **2**. Figure 4 shows the flow chart of an example of this adjustment program. In a step **41** the value Nᵥ=10 is applied to the register **157** (see Figure 2). This is a default value for the pulse width of the vertical synchronizing pulses. Subsequently, a menu program **42** is carried out. Broadly speaking, this menu program comprises the following steps: generating a picture in which picture parameters such as horizontal picture position, vertical picture position, horizontal picture amplitude, vertical picture amplitude, brightness and contrast appear as menu options; selecting a picture parameter by means of cursor keys or a mouse; and assigning a value to the selected picture parameter or activating an instruction to increment or decrement the actual value.

It will be assumed hereinafter that a given code has been assigned to each picture parameter, for example the code 1 for the horizontal picture position, 2 for the vertical picture position, 3 for the horizontal picture amplitude, 4 for the vertical picture amplitude, 5 for the brightness and 6 for the contrast. Furthermore, the instruction to increment or decrement the parameter value is represented by a bit having the value 0 for "incrementing" and the value 1 for "decrementing". Thus, the menu program **42** supplies a control signal in the form of, for example, an 8-bit code word C. By way of example, the control signal "reduce contrast" is represented by the code word C=10000110 (hex 86).

Subsequently, the code word C is transferred to the monitor. In a step **43** of the adjustment program the initial value 0 is assigned to a bit counter n and in a step **44** a bit b to be transmitted (initially a start bit) is given the logic value 0. In a step **45** the value of the bit b to be transmitted is determined. For b=1 the normal value Nᵥ=10 (step **46**) is applied to the register **157** (see Figure 2). For b=0 a deviating value, for example Nᵥ=9 (step **47**), is applied. In a step **48** the adjustment program then waits until the corresponding vertical synchronizing pulse has been produced. Since the value of the start bit is 0, the width of this pulse becomes Nᵥ=9. Subsequently, the bit counter n is incremented by 1 in a step **49** so that it assumes the value 1. In a step **50** it is checked whether n has exceeded the value 8. For the time being, this is not the case so that in a step **51** the value of the first bit C(1) of the code word C is assigned to the next bit to be transmitted. The program now repeats the steps **45-48** in which the pulse width is set to the value 9 or 10, depending on the value of the bit b. After all 8 bits of the code word C have thus been processed, the program returns, *via* the step **50**, to the step **41** in which again the default value Nᵥ=10 is assigned to the pulse width. Subsequently, the selected parameter may be further incremented or decremented in the subprogram **42**, or another parameter may be selected.

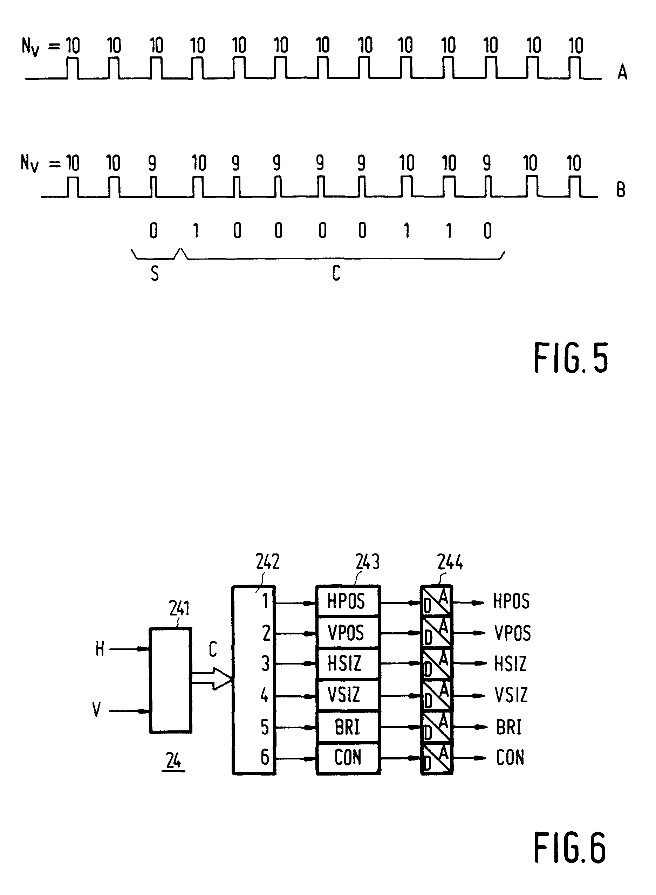

In Figure 5 (not to scale) waveform B shows a train of vertical synchronizing pulses whose pulse width has thus been modulated by means of the start bit S and the code word C=10000110 ("reduce contrast"). By way of reference, waveform A shows the synchronizing signal generated in the absence of a control signal.

The operation of the monitor **2** will now be explained with reference to Figure 1. The monitor comprises a video amplifier **21** which receives the video signals RGB and applies them to a picture tube **22**. The amplifier has two inputs to which analog control voltages BRI and CON for adjusting the brightness and the contrast, respectively, are applied. The monitor further comprises a sync processor and deflection controller **23** which receives the synchronizing signals H and V from the picture source and supplies corresponding deflection signals DFL to the picture tube **22**. The circuit **23** has four inputs to which analog control voltages HPOS, VPOS, HSIZ and VSIZ are applied for adjustment of the horizontal picture position, the vertical picture position, the horizontal picture amplitude and the vertical picture amplitude, respectively. So far, the monitor is of generally known construction. The video amplifier **21** is formed by, for example, the integrated circuit TDA4881, which is commercially available from Philips. The sync processor and deflection controller **23** is formed by, for example, the integrated circuit TDA4852, which is also commercially available from Philips.

The monitor further comprises an adjustment circuit **24** which receives the synchronizing signals H and V and demodulates and decodes said analog control voltages from these synchronizing signals. This adjustment circuit is shown in more detail in Figure 6. It comprises a demodulator **241**, a decoder **242**, a plurality of non-volatile registers **243** and a plurality of digital-to-analog converters **244**. Although the demodulator and the decoder may be constructed as dedicated hardware circuitry, their respective function can also be implemented by means of a microprocessor. An example is the microprocessor PCE84C886 from Philips.

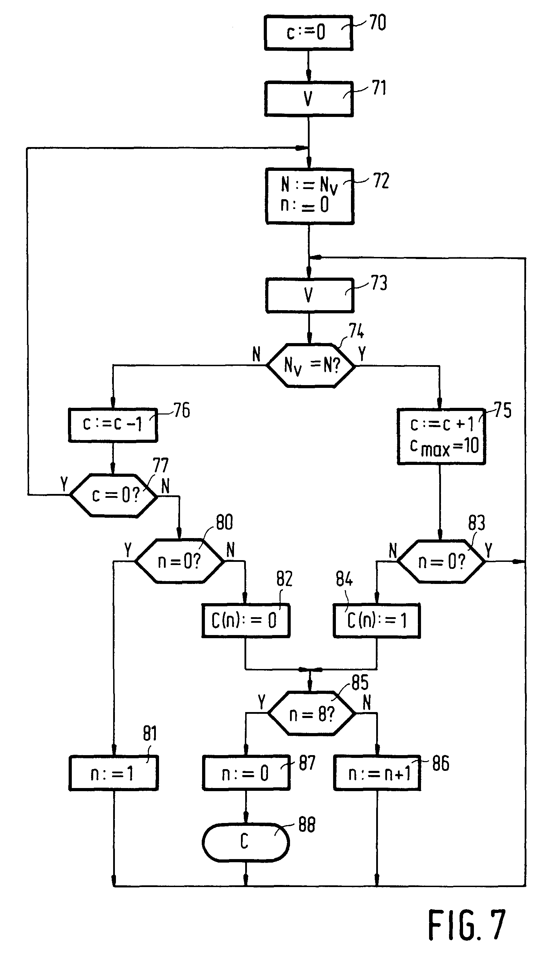

The operation of the adjustment circuit **24** is controlled by a control program performed by said microprocessor. Figure 7 shows the flow chart of an example of this control program. The program includes a measurement part (steps **70-77**), in which the unmodulated pulse width of the vertical synchronizing pulses is measured. This part is not needed if a standard value has been adopted for the unmodulated pulse width, for example the above-mentioned value Nᵥ=10. The program further comprises a demodulation part (steps **80-88**), in which the synchronizing signal is demodulated in order to obtain the control signal.

In a program step **70**, which is performed when the monitor is switched on, the initial value 0 is assigned to a pulse counter c. Subsequently, in a step **71** the first vertical synchronizing pulse is awaited and its width Nᵥ is determined. This is effected by counting the number of line pulses H during one picture pulse V. In a step **72** the width Nᵥ is stored in a variable N and the initial value 0 is assigned to a bit counter n. The value n=0 of the bit counter indicates that no start bit of a control signal has been detected yet. In a step **73** a following synchronizing pulse is awaited. In a step **74** it is ascertained whether the pulse width Nᵥ of this pulse is equal to the stored value N. If this is the case, the pulse counter c is incremented by 1 in a step **75**, c having a predetermined maximum count, for example 10. After the demodulation steps **83-88** (to be described hereinafter) have been carried out, the program returns to the step **73** to wait for the next synchronizing pulse. If and as long as the synchronizing signal has not been modulated, all the synchronizing pulses will have the same pulse width N and the pulse counter will reach and retain its maximum count.

If a deviating pulse width has been detected in the step **74**, the pulse counter is decremented by 1 in a step **76**. If this deviating value recurs, for example 10 times in succession, c will reach the value 0. Now there is apparently no question of modulation of the pulse width but of a default pulse width which differs from N. This is detected in a step **77**, after which the program returns to the step **72** in which the new pulse width N is stored. In this way, the control program measures the unmodulated pulse width, so that this pulse width need not be laid down in a standard.

The demodulation steps of the control program will now be described. If the deviating pulse width occurs, a step **80** is performed to check whether the bit counter n is still 0. This means that now a start bit has been received. The value 1 is then assigned to n in a step **81**. From now on, the bit counter n indicates which bit of the code word C is being received. If again a deviating pulse width occurs in this situation, the value 0 will be assigned to the bit C(n) of the code word C in a step **82**. If the normal pulse width occurs upon receipt of the start bit (step **83**), the value 1 will be assigned to C(n) in a step **84**. After this, a step **85** is performed to ascertain whether all 8 bits of the code word have been received. As long as this is not the case, the bit counter n is incremented by 1 (step **86**). When all 8 bits have been received, the code word is complete. The bit counter n then resumes the value 0 (step **87**) to prepare for the next reception of a start bit.

Finally, in a subprogram **88** the code word C is decoded and the monitor is adjusted accordingly. For example, if the code word C=10000110 ("reduce contrast") has been received, the actual value of the corresponding register **243** (CON in Figure 6) is decremented by 1. After digital-analog conversion **244**, this results in a smaller control voltage CON for the video amplifier **21** (see Figure 1) and a corresponding reduction of the picture contrast.

It is noted that where in the foregoing control signals were mentioned, these need not be restricted to signals for adjusting the horizontal and vertical picture position, horizontal and vertical picture amplitude, brightness and contrast. It is equally possible to control other monitor functions as well, for example switching between a plurality of line and picture frequencies, audio volume and stereo balance, (de)activation of a screen saver, switching the monitor on or off, and the like. The invention is also applicable to carrying out factory adjustments such as black level settings, V_{g2} adjustment, etc.

## Claims

1. A picture display arrangement comprising:
a picture source for generating a video signal and a synchronizing signal, the synchronizing signal comprising synchronizing pulses whose frequency is representative of the line frequency or picture frequency of the video signal;
a monitor for displaying a picture represented by said signals, which monitor has an adjustment circuit for adjusting picture parameters in response to control signals applied to the circuit;
the picture source being suited to generate the control signals and modulate the synchronizing signal with the control signals, the monitor having a demodulator for demodulating the synchronizing signal in order to obtain the control signals, characterized in that the picture source is adapted to modulate the pulse width of the synchronizing pulses with the control signals and that the demodulator is adapted to demodulate the control signals from the pulse width of the synchronizing pulses, said pulse width being constrained to a range of widths that are recognized as regular pulse widths by a monitor not having a demodulator for demodulating the control signals from the synchronizing signal.

2. A picture source for generating a video signal and a synchronizing signal to be applied to a monitor, the synchronizing signal comprising synchronizing pulses whose frequency is representative of the line frequency or picture frequency of the video signal, the picture source being suited to generate control signals for at least adjusting picture parameters of the monitor and modulate the synchronizing signal with the control signals, characterized in that the picture source is adapted to modulate the pulse width of the synchronizing pulses with the control signals, said pulse width being constrained to a range of widths that are recognized as regular pulse widths by a monitor not having a demodulator for demodulating the control signals from the synchronizing signal.

3. A picture source as claimed in Claim 2, in which the pulse width of vertical pulses is modulated.

4. A picture source as claimed in Claim 3, characterized in that the control signal is transmitted in the form of a bit series preceded by a start bit, the logic value of a bit being represented by the pulse width of a synchronizing pulse.

5. A picture source as claimed in Claim 4, characterized in that each bit series includes a code for a picture parameter and a value for said parameter.

6. A picture source as claimed in Claim 4, characterized in that each bit series includes a code for a picture parameter and an instruction for changing the value of said parameter by a given amount.

7. A personal computer having a picture source as claimed in any one of Claims 2-6.

8. A monitor for displaying video pictures in response to a received video signal and synchronizing signal, which monitor has an adjustment circuit for adjusting picture parameters in response to control signals applied to the circuit, the synchronizing signal comprising synchronizing pulses whose frequency is representative of the line frequency or picture frequency of the video signal, the adjustment circuit being coupled to a demodulator for demodulating the synchronizing signal in order to obtain the control signals, characterized in that the demodulator is adapted to demodulate the control signals from the pulse width of synchronizing pulses, said pulse width being constrained to a range of widths that are recognized as regular pulse widths by a monitor not having a demodulator for demodulating the control signals from the synchronizing signal.

9. A monitor as claimed in Claim 8, characterized in that the demodulator is adapted to demodulate a logic bit value from the pulse width of each synchronizing pulse and to derive a corresponding control signal from a start bit and a bit series following said start bit.

10. A monitor as claimed in Claim 9, further comprising a decoder for decoding the bit series into a picture parameter and a value for said parameter.

11. A monitor as claimed in Claim 9, further comprising a decoder for decoding the bit series into a picture parameter and an instruction for changing the value of said parameter by a predetermined amount.

12. A demodulator for use in a monitor as claimed in any one of Claims 8-11, characterized in that the demodulator is adapted to demodulate a synchronizing signal in order to obtain control signals for adjusting picture parameters of the monitor, the demodulator being adapted to demodulate the control signals from the pulse width of synchronization pulses of the synchronizing signal, said pulse width being constrained to a range of widths that are recognized as regular pulse widths by a monitor not having a demodulator for demodulating the control signals from the synchronizing signal.

## Patentansprüche

1. Bildwiedergabeanordnung mit:
- einer Bildquelle zum Erzeugen eines Videosignals und eines Synchronisationssignals, wobei dieses Synchronisationssignal Synchronimpulse aufweist, deren Frequenz für die Horizontal-Frequenz oder Vertikal-Frequenz des Videosignals repräsentativ ist;
- einem Monitor zum Wiedergeben eines Bildes, das durch die genannten Signale dargestellt wird, wobei dieser Monitor mit einer Anordnung versehen ist zum Einstellen von Bildparametern in Reaktion auf Steuersignale, die der Schaltungsanordnung zugeführt werden;
wobei die Bildquelle geeignet ist zum Erzeugen der Steuersignale und zum Modulieren des Synchronisationssignals mit den Steuersignalen. wobei der Monitor einen Demodulator aufweist zum Demodulieren des Synchronsignals, damit die Steuersignale erhalten werden, dadurch gekennzeichnet, dass die Bildquelle dazu eingerichtet ist, die Impulsbreite der Synchronimpulse mit den Steuersignalen zu modulieren und dass der Demodulator dazu eingerichtet ist, die Steuersignale von der Impulsbreite der Synchronimpulse zu demodulieren, wobei die genannte Impulsbreite auf einen Bereich von Breiten beschränkt ist, die von dem Monitor ohne Demodulator zum Demodulieren der Steuersignale von dem Synchronsignal als richtige Impulsbreiten betrachtet werden

2. Bildquelle zum Erzeugen eines Videosignals und eines einem Monitor zuzuführenden Synchronisationssignals, wobei dieses Synchronisationssignal Synchronimpulse aufweist, deren Frequenz für die Honzontal-Frequenz oder Vertikal-Frequenz des Videosignals repräsentativ ist, wobei die Bildquelle geeignet ist zum Erzeugen von Steuersignalen wenigstens zum Einstellen von Bildparametern des Monitors und zum Modulieren des Synchronisationssignals mit den Steuersignalen, dadurch gekennzeichnet, dass die Bildquelle dazu eingerichtet ist, die Impulsbreite der Synchronimpulse mit den Steuersignalen zu modulieren und dass der Demodulator dazu eingerichtet ist, die Steuersignale von der Impulsbreite der Synchronimpulse zu demodulieren, wobei die genannte Impulsbreite auf einen Bereich von Breiten beschränkt ist, die von dem Monitor ohne Demodulator zum Demodulieren der Steuersignale von dem Synchronsignal als richtige Impulsbreiten betrachtet werden.

3. Bildquelle nach Anspruch 2, wobei die Impulsbreite der Vertikal-Impulse moduliert wird.

4. Bildquelle nach Anspruch 3. dadurch gekennzeichnet, dass das Steuersignal in Form einer Bitreihe, der ein Startbit vorhergeht, übertragen wird, wobei der logische Wert eines Bits durch die Impulsbreite des Synchronimpulses dargestellt wird.

5. Bildquelle nach Anspruch 4, dadurch gekennzeichnet, dass jede Bitreihe einen Code für einen Bildparameter und einen Wert für den genannten Parameter aufweist.

6. Bildquelle nach Anspruch 4, dadurch gekennzeichnet, dass jeder Bitreihe einen Code für einen Bildparameter und eine Instruktion zum Ändern des Wertes des genannten Parameters um einen bestimmten betrag aufweist.

7. PC mit einer Bildquelle nach einem der Ansprüche 2 bis 6.

8. Monitor zum Wiedergeben von Videobildern in Reaktion auf ein empfangenes Videosignal und Synchronisationssignal, wobei dieser Monitor eine Einstellschaltung aufweist zum Einstellen von Bildparametern in Reaktion auf Steuersignale, die der Schaltungsanordnung zugeführt werden, wobei das Synchronisationssignal Synchronimpulse aufweist, deren Frequenz für die Horizontal-Frequenz oder Vertikal-Frequenz des Videosignals repräsentativ ist, wobei die Einstellschaltung mit einem Demodulator gekoppelt ist zum Demodulieren des Synchronisationssignals, damit die Steuersignale erhalten werden, dadurch gekennzeichnet, dass der Demodulator die Steuersignale aus der Impulsbreite der Synchronimpulse demoduliert, wobei die genannte Impulsbreite auf einen Bereich von Breiten beschränkt ist, die als regelmäßige Breiten von einem Monitor ohne einen Demodulator zum Demodulieren der Steuersignale aus dem Synchronisationssignal erkannt werden.

9. Monitor nach Anspruch 8, dadurch gekennzeichnet, dass der Demodulator einen logischen Bitwert aus der Impulsbreite jedes Synchronimpulses demoduliert und ein entsprechendes Steuersignal aus einem Startbit und einer diesem Startbit nachfolgenden Bitreihe herleitet.

10. Monitor nach Anspruch 9, weiterhin mit einem Decoder zum Decodieren der Bitreihe in einen Bildparameter und einen Wert für den genannten Parameter.

11. Monitor nach Anspruch 9, weiterhin mit einem Decoder zum Decodieren der Bitreihe in einen Bildparameter und eine Instruktion zum Ändern des Wertes des genannten Parameters um einen vorbestimmten Betrag.

12. Demodulator zum Gebrauch in einem Monitor nach einem der Ansprüche 8 bis 11, dadurch gekennzeichnet, dass der Demodulator ein Synchronisationssignal demoduliert zum Erhalten von Steuersignalen zur Einstellung von Bildparametern des Monitors, wobei der Demodulator die Steuersignale aus der Impulsbreite von Synchronimpulsen des Synchronisationssignals demoduliert, wobei die genante Impulsbreite auf einen Bereich von Breiten beschränkt ist, die von einem Monitor, der keinen Demodulator zum Demodulieren der Steuersignale aus dem Synchronisationssignal hat, als regelmäßige Impulsbreiten erkannt werden.

## Revendications

1. Système d'affichage d'images comprenant :
une source d'images pour la génération d'un signal vidéo et d'un signal de synchronisation, le signal de synchronisation comprenant des impulsions de synchronisation dont la fréquence est représentative de la fréquence de ligne ou de la fréquence d'image du signal vidéo;
un moniteur pour afficher une image représentée par lesdits signaux, lequel moniteur possède un circuit d'ajustement pour ajuster les paramètres d'image en réponse à des signaux de commande appliqués au circuit;
la source d'images étant rendue apte à générer les signaux de commande et moduler le signal de synchronisation avec les signaux de commande, le moniteur ayant un démodulateur pour démoduler le signal de synchronisation afin d'obtenir les signaux de commande, caractérisé en ce que la source d'images est conçue pour moduler la largeur d'impulsion des impulsions de synchronisation en fonction des signaux de commande et le démodulateur est conçu pour démoduler les signaux de commande à partir de la largeur d'impulsion des impulsions de synchronisation, ladite largeur d'impulsion étant limitée à une plage de largeurs qui sont reconnues comme largeurs d'impulsion normales par un moniteur n'ayant pas de démodulateur pour démoduler les signaux de commande à partir du signal de synchronisation.

2. Source d'images pour générer un signal vidéo et un signal de synchronisation à appliquer à un moniteur, le signal de synchronisation comprenant des impulsions de synchronisation dont la fréquence est représentative de la fréquence de ligne ou de la fréquence d'image du signal vidéo, la source d'images étant rendue apte à générer des signaux de commande pour au moins régler des paramètres d'image du moniteur et moduler le signal de synchronisation en fonction des signaux de commande, caractérisée en ce que la source d'images est conçue pour moduler la largeur d'impulsion des impulsions de synchronisation en fonction des signaux de commande, ladite largeur d'impulsion étant limitée à une plage de largeurs qui sont reconnues comme largeurs d'impulsion normales par un moniteur n'ayant pas de démodulateur pour démoduler les signaux de commande à partir du signal de synchronisation.

3. Source d'images suivant la revendication 2, dans laquelle la largeur d'impulsion des impulsions verticales est modulée.

4. Source d'images suivant la revendication 3, caractérisée en ce que le signal de commande est transmis sous la forme d'une série de bits précédée par un bit de départ, la valeur logique d'un bit étant représentée par la largeur d'impulsion d'une impulsion de synchronisation.

5. Source d'images suivant la revendication 4, caractérisée en ce que chaque série de bits inclut un code pour un paramètre d'image et une valeur pour ledit paramètre.

6. Source d'images suivant la revendication 4, caractérisée en ce que chaque série de bits inclut un code pour un paramètre d'image et une instruction pour changer la valeur dudit paramètre d'un montant donné.

7. Ordinateur personnel ayant une source d'images telle que revendiquée dans l'une quelconque des revendications 2-6.

8. Moniteur pour afficher des images vidéo en réponse à un signal vidéo et un signal de synchronisation reçus, lequel moniteur possède un circuit d'ajustement pour ajuster les paramètres d'image en réponse à des signaux de commande appliqués au circuit, le signal de synchronisation comprenant des impulsions de synchronisation dont la fréquence est représentative de la fréquence de ligne ou de la fréquence d'image du signal vidéo, le circuit d'ajustement étant couplé à un démodulateur pour démoduler le signal de synchronisation afin d'obtenir les signaux de commande, caractérisé en ce que le démodulateur est conçu pour démoduler les signaux de commande à partir de la largeur d'impulsion des impulsions de synchronisation, ladite largeur d'impulsion étant limitée à une plage de largeurs qui sont reconnues comme largeurs d'impulsion normales par un moniteur n'ayant pas de démodulateur pour démoduler les signaux de commande à partir du signal de synchronisation.

9. Moniteur suivant la revendication 8, caractérisé en ce que le démodulateur est conçu pour démoduler une valeur de bit logique à partir de la largeur d'impulsion de chaque impulsion de synchronisation et dénver un signal de commande correspondant à partir d'un bit de départ et d'une série de bits suivant ledit bit de départ.

10. Moniteur suivant la revendication 9, comprenant en outre un décodeur pour décoder la série de bits en un paramètre d'image et une valeur pour ledit paramètre.

11. Moniteur suivant la revendication 9, comprenant en outre un décodeur pour décoder la série de bits en un paramètre d'image et une instruction pour changer la valeur dudit paramètre d'un montant défini.

12. Démodulateur destiné à être utilisé dans un moniteur suivant l'une quelconque des revendications 8-11, caractérisé en ce que le démodulateur est conçu pour démoduler un signal de synchronisation afin d'obtenir des signaux de commande pour ajuster des paramètres d'image du moniteur, le démodulateur étant conçu pour démoduler les signaux de commande à partir de la largeur d'impulsion des impulsions du signal de synchronisation, ladite largeur d'impulsion étant limitée à une plage de largeurs qui sont reconnues comme largeurs d'impulsion normales par un moniteur n'ayant pas de démodulateur pour démoduler les signaux de commande à partir du signal de synchronisation.
